# EUROPEAN PATENT SPECIFICATION

(11) **EP 4 569 926 B1**
(45) Date of publication and mention of the grant of the patent: **06.08.2025**
(21) Application number: 23736489.8
(22) Date of filing: 21.06.2023
(51) Int. Cl.: H04W 48/20, H04W 36/24, H04W 36/16

(54) **ON HO TYPE INFORMATION ASSOCIATED TO VOICE FALLBACK HANDOVER**
ON-HO-INFORMATIONEN IM ZUSAMMENHANG MIT EINER SPRACH-FALLBACK-WEITERREICHUNG
INFORMATIONS DE TYPE HO ASSOCIÉES À UN TRANSFERT DE REPLI VOCAL

(30) Priority: 09.08.2022 US 202263396393 P
(43) Date of publication of application: 18.06.2025
(73) Proprietor: Telefonaktiebolaget LM Ericsson (publ), 164 83 Stockholm (SE)
(72) Inventor: RAMACHANDRA, Pradeepa, 589 29 Linköping (SE); BIN REDHWAN, Sakib, 586 49 Linköping (SE); PARICHEHREHTEROUJENI, Ali, 583 34 Linköping (SE); BELLESCHI, Marco, 171 55 Solna (SE)
(74) Representative: Ericsson
(86) International application number: PCT/SE2023/050640
(87) International publication number: WO 2024/035288

(56) References cited:
- WO-A1-2022/021077
- US-A1- 2019 159 099
- "3rd Generation Partnership Project; Technical Specification Group Radio Access Network; NR; Radio Resource Control (RRC) protocol specification (Release 17)", vol. RAN WG2, no. V17.1.0, 19 July 2022 (2022-07-19), pages 1 - 1273, XP052183757, Retrieved from the Internet <URL:https://ftp.3gpp.org/Specs/archive/38_series/38.331/38331-h10.zip 38331-h10.docx> [retrieved on 20220719]
- ERICSSON: "Mobility Robustness Optimization - all topics", vol. RAN WG2, no. Incheon; 20230522 - 20230526, 12 May 2023 (2023-05-12), XP052390749, Retrieved from the Internet <URL:https://ftp.3gpp.org/tsg_ran/WG2_RL2/TSGR2_122/Docs/R2-2305987.zip R2-2305987 - Mobility Robustness Optimisation â all topics.docx> [retrieved on 20230512]
- ERICSSON: "On Mobility Robustness Optimization", vol. RAN WG2, no. Electronic meeting; 20220817 - 20220829, 10 August 2022 (2022-08-10), XP052261489, Retrieved from the Internet <URL:https://ftp.3gpp.org/tsg_ran/WG2_RL2/TSGR2_119-e/Docs/R2-2208177.zip R2-2208177 - On Mobility Robustness Optimization.docx> [retrieved on 20220810]

## Description

### Related Applications

This application claims the benefit of provisional patent application serial number 63/396,393, filed August 9, 2022.

### Technical Field

The present disclosure relates to a cellular communications system and, more specifically, to reporting of information related to radio link failure after a successful or failed handover.

### Background

### Voice Fallback from New Radio (NR) to Long Term Evolution (LTE)

In Third Generation Partnership Project (3GPP), voice fallback from New Radio (NR) to Long Term Evolution (LTE) is used to transfer a User Equipment (UE) from NR to LTE during the call establishment procedure. It enables the UE to utilize all NR functionality except voice options in places where the NR network is not optimized for voice services. In order to support various deployment scenarios for obtaining Internet Protocol (IP) Multimedia Subsystem (IMS) voice service, the UE and Next Generation Radio Access Network (NG-RAN) may support the mechanism to direct or redirect the UE from NG-RAN either towards Evolved Universal Terrestrial Radio Access (E-UTRA) connected to the Fifth Generation Core (5GC) (Radio Access Technology, RAT, fallback) or towards the Evolved Packet System (EPS) (Evolved Universal Terrestrial Radio Access Network, E-UTRAN, connected to Evolved Packet Core, EPC, System fallback). During the UE registration procedure, the serving Access and Mobility Management Function (AMF) informs the UE if IMS voice over Packet Switch (PS) session is supported. If a request for establishing the Quality of Service (QoS) Flow for IMS voice reaches the NG-RAN, the NG-RAN responds indicating rejection of the establishment request, and the NG-RAN may trigger one of the following procedures depending on UE capabilities, N26 availability, network configuration, and radio conditions:
- Redirection to EPS,
- Handover procedure to EPS,
- Redirection to E-UTRA connected to 5GC, or
- Handover to E-UTRA connected to 5GC.

Further details can be found in 3GPP Technical Specification (TS) 23.501 (see, e.g., V17.4.0).

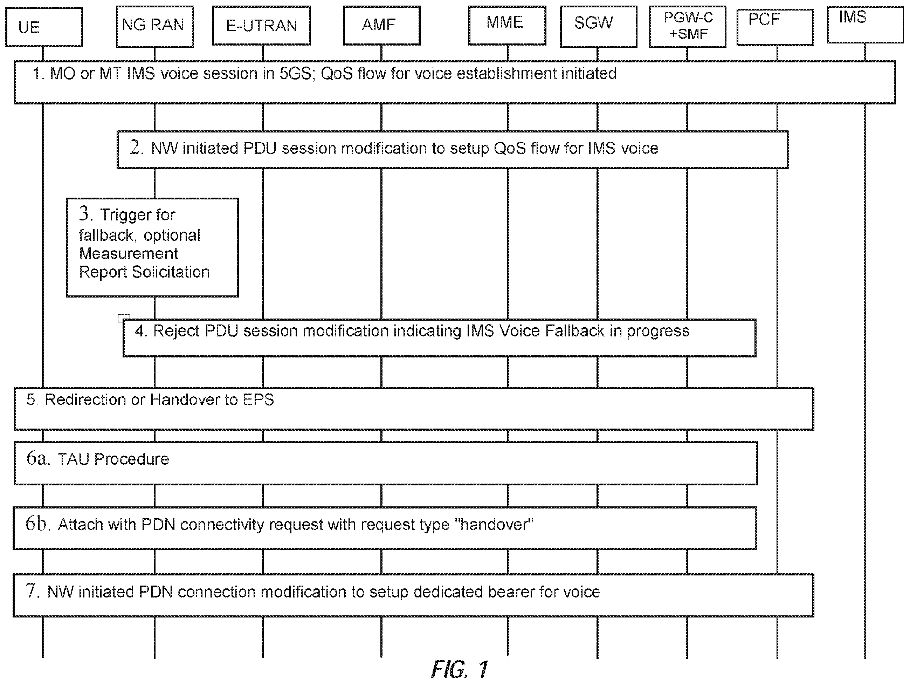

Figure 1 describes the EPS fallback procedure for IMS voice. A detailed description of Figure 1 can be found in section 4.13.6.1 of 3GPP TS 23.502 (see, e.g., V17.4.0).

### Self-Organizing Networks (SON) in 3GPP

A Self-Organizing Network (SON) is an automation technology designed to make the planning, configuration, management, optimization, and healing of mobile radio access networks simpler and faster. SON functionality and behavior has been defined and specified in generally accepted mobile industry recommendations produced by organizations such as 3GPP and the Next Generation Mobile Networks (NGMN).

In 3GPP, the processes within the SON area are classified into self-configuration process and self-optimization process. The self-configuration process is the process where newly deployed nodes are configured by automatic installation procedures to get the necessary basic configuration for system operation. This process works in pre-operational state. The pre-operational state is understood as the state from when the evolved Node B (eNB) is powered up and has backbone connectivity until the radio frequency (RF) transmitter is switched on.

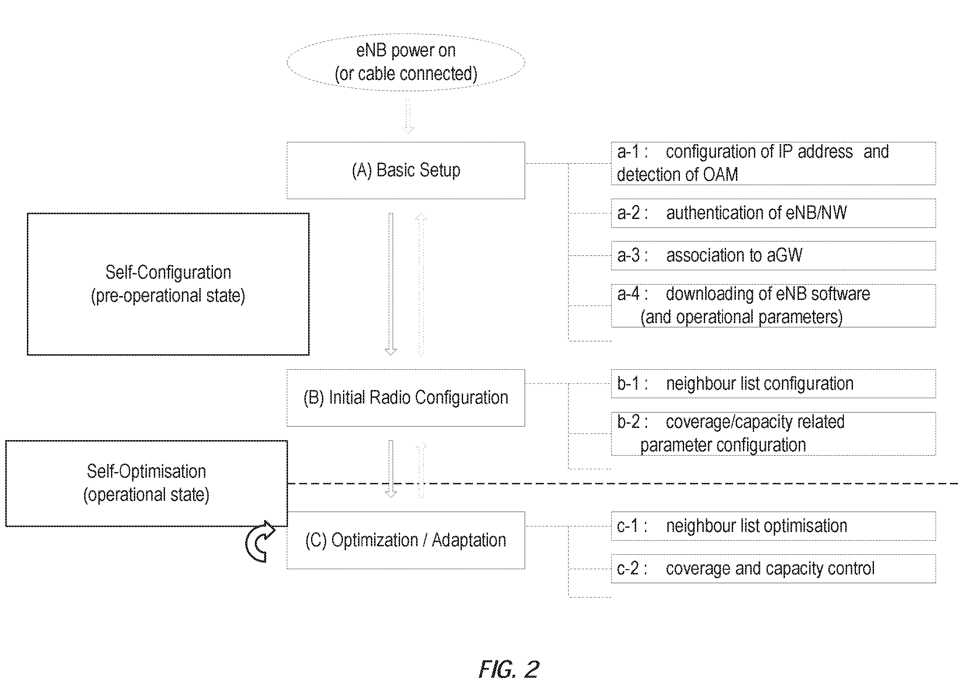

Figure 2 illustrates ramifications of Self-Configuration /Self-Optimization functionality (from 3GPP TS 36.300 figure 22.1-1). As illustrated in Figure 2, functions handled in the pre-operational state like:
- Basic Setup; and
- Initial Radio Configuration
are covered by the Self Configuration process.

The self-optimization process is defined as the process where UE and access node measurements and performance measurements are used to auto-tune the network. This process works in operational state. The operational state is understood as the state where the RF interface is additionally switched on. As described in Figure 2, functions handled in the operational state like:
- Optimization / Adaptation
are covered by the Self Optimization process.

In LTE, support for Self-Configuration and Self-Optimization is specified, as described in 3GPP TS 36.300 section 22.2, including features such as Dynamic configuration, Automatic Neighbor Relation (ANR), Mobility load balancing, Mobility Robustness Optimization (MRO), Random Access Channel (RACH) optimization and support for energy saving.

In NR, support for Self-Configuration and Self-Optimization is specified as well, starting with Self-Configuration features such as Dynamic configuration, Automatic Neighbor Relation (ANR) in Rel-15, as described in 3GPP TS 38.300 section 15. In NR Rel-16, more SON features are being specified, including Self-Optimization features such as Mobility Robustness Optimization (MRO).

### Mobility Robustness Optimization (MRO) in 3GPP

Seamless handovers are a key feature of 3GPP technologies. Successful handovers ensure that the UE moves around in the coverage area of different cells without causing too many interruptions in the data transmission. However, there will be scenarios when the network fails to handover the UE to the 'correct' neighbor cell in time and, in such scenarios, the UE will declare a Radio Link Failure (RLF) or Handover Failure (HOF).

Upon HOF and RLF, the UE may take autonomous actions i.e., try to select a cell and initiate reestablishment procedure so that we make sure the UE is trying to get back as soon as it can, so that it can be reachable again. The RLF will cause a poor user experience as the RLF is declared by the UE only when it realizes that there is no reliable communication channel (radio link) available between itself and the network. Also, reestablishing the connection requires signaling with the newly selected cell (random access procedure, Radio Resource Control (RRC) Reestablishment Request, RRC Reestablishment RRC Reestablishment Complete, RRC Reconfiguration, and RRC Reconfiguration Complete) and adds some latency, until the UE can exchange data with the network again.

According to the 3GPP specifications (see 3GPP TS 36.331), the possible causes for RLF could be one of the following:
1) Expiry of the radio link monitoring related timer T310;
2) Expiry of the measurement reporting associated timer T312 (not receiving the handover command from the network within this timer's duration despite sending the measurement report when T310 was running);
3) Upon reaching the maximum number of Radio Link Control (RLC) retransmissions;
4) Upon receiving random access problem indication from the Medium Access Control (MAC) entity.

As RLF leads to reestablishment which degrades performance and user experience, it is in the interest of the network to understand the reasons for RLF and try to optimize mobility related parameters (e.g., trigger conditions of measurement reports) to avoid later RLFs. Before the standardization of MRO related report handling in the network, only the UE was aware of some information associated to what the radio quality looked like at the time of RLF, what the actual reason for declaring RLF was, etc. For the network to identify the reason for the RLF, the network needs more information, both from the UE and also from the neighboring base stations.

As part of the MRO solution in LTE, the RLF reporting procedure was introduced in the RRC specification in Rel-9 RAN2 work. That has impacted the RRC specifications (3GPP TS 36.331) in the sense that it was standardized that the UE would log relevant information at the moment of an RLF and later report to a target cell to which the UE succeeds to connect (e.g., after reestablishment). That has also impacted the inter-gNodeB interface, i.e., X2AP specifications (3GPP TS 36.423), as an eNodeB receiving an RLF report could forward to the eNodeB where the failure has been originated.

For the RLF report generated by the UE, its contents have been enhanced with more details in the subsequent releases. The measurements included in the measurement report based on the latest LTE RRC specification (see TS 23.501 V17.4.0) are:
1) Measurement quantities (Reference Signal Received Power (RSRP), Reference Signal Received Quality (RSRQ)) of the last serving cell (Primary Cell (PCell)).
2) Measurement quantities of the neighbor cells in different frequencies of different RATs (E-UTRA, Universal Terrestrial Radio Access (UTRA), Global System for Mobile communications (GSM) Enhanced Data rates for GSM Evolution (EDGE) Radio Access Network (GERAN), Code Division Multiple Access (CDMA) 2000 (CDMA2000)).
3) Measurement quantity (Received Strength of Signal Indicator (RSSI)) associated to Wireless Local Area Network (WLAN) Access Points (APs).
4) Measurement quantity (RSSI) associated to Bluetooth beacons.
5) Location information, if available (including location coordinates and velocity)
6) Globally unique identity of the last serving cell, if available, otherwise the Physical Cell Identity (PCI) and the carrier frequency of the last serving cell.
7) Tracking area code of the PCell.
8) Time elapsed since the last reception of the *'Handover command'* message.
9) Cell Radio Network Temporary Identifier (C-RNTI) used in the previous serving cell.
10) Whether or not the UE was configured with a Data Radio Bearer (DRB) having QoS Class Identifier (QCI) value of 1.

After the RLF is declared, the RLF report is logged and include in the VarRLF-Report and, once the UE selects a cell and succeeds with a reestablishment, the UE includes an indication that it has an RLF report available in the RRC Reestablishment Complete message, to make the target cell aware of that availability. Then, upon receiving an *UEInformationRequest* message with a flag "rlf-ReportReq-r9", the UE includes the RLF report (stored in a UE variable VarRLF-Report, as described above) in an *UEInformationResponse* message and sends the *UEInformationResponse* message to the network.

Based on the RLF report from the UE and the knowledge about the cell to which the UE reestablished itself, the original source cell can deduce whether the RLF was caused due to a coverage hole or due to handover associated parameter configurations. If the RLF was deemed to be due to handover associated parameter configurations, the original serving cell can further classify the handover related failure as too-early, too-late, or handover to wrong cell classes. These handover failure classes are explained in brief below.
1) Whether the handover failure occurred due to the 'too-late handover' cases
   a. The original serving cell can classify a handover failure to be 'too late handover' when the original serving cell fails to send the handover command to the UE associated to a handover towards a particular target cell and if the UE reestablishes itself in this target cell post RLF.
   b. An example corrective action from the original serving cell could be to initiate the handover procedure towards this target cell a bit earlier by decreasing the CIO (cell individual offset) towards the target cell that controls when the IE sends the event triggered measurement report that leads to taking the handover decision.
2) Whether the handover failure occurred due to the 'too-early handover' cases
   a. The original serving cell can classify a handover failure to be 'too early handover' when the original serving cell is successful in sending the handover command to the UE associated to a handover however the UE fails to perform the random access towards this target cell.
   b. An example corrective action from the original serving cell could be to initiate the handover procedure towards this target cell a bit later by increasing the CIO (cell individual offset) towards the target cell that controls when the IE sends the event triggered measurement report that leads to taking the handover decision.
3) Whether the handover failure occurred due to the 'handover-to-wrong-cell' cases
   a. The original serving cell can classify a handover failure to be 'handover-to-wrong-cell' when the original serving cell intends to perform the handover for this UE towards a particular target cell but the UE declares the RLF and reestablishes itself in a third cell.
   b. A corrective action from the original serving cell could be to initiate the measurement reporting procedure that leads to handover towards the target cell a bit later by decreasing the CIO (cell individual offset) towards the target cell or via initiating the handover towards the cell in which the UE reestablished a bit earlier by increasing the CIO towards the reestablishment cell.

Document WO 2022/021077 A1, which is considered relevant prior art for the present application, discloses a handover procedure in which the UE is configured with a MobilityFromNRCommand comprising a voice fallback indication.

### Summary

The invention is set out in the independent claims. Further embodiments are set out in the dependent claims.

### Brief Description of the Drawings

The accompanying drawing figures incorporated in and forming a part of this specification illustrate several aspects of the disclosure, and together with the description serve to explain the principles of the disclosure.
Figure 1 describes the Evolved Packet System (EPS) fallback procedure for Internet Protocol (IP) Multimedia Subsystem (IMS) voice as defined in 3^{rd} Generation Partnership Project (3GPP) Technical Specification (TS) 23.502;
Figure 2 illustrates ramifications of Self-Configuration/Self-Optimization functionality and is a reproduction of Figure 22.1-1 of 3GPP TS 36.300;
Figure 3 is a flow chart that illustrates the operation of a User Equipment (UE) to store and report an indication that indicates whether a last completed handover was for voice fallback purpose in a report associated with a Radio Link Failure (RLF), in accordance with one embodiment of the present disclosure;
Figure 4 is a flow chart that illustrates the operation of a UE to store and report an indication that indicates that the serving cell in which an RLF occurred was selected as part of cell selection due to a voice fallback indication, in accordance with another embodiment of the present disclosure;
Figure 5 is a flow chart that illustrates the operation of a network node in accordance with one embodiment of the present disclosure;
Figure 6 shows an example of a communication system in which embodiments of the present disclosure may be implemented;
Figure 7 shows a UE in accordance with some embodiments;
Figure 8 shows a network node in accordance with some embodiments;
Figure 9 is a block diagram of a host, which may be an embodiment of the host 616 of Figure 6, in accordance with various aspects described herein;
Figure 10 is a block diagram illustrating a virtualization environment in which functions implemented by some embodiments may be virtualized; and
Figure 11 shows a communication diagram of a host communicating via a network node with a UE over a partially wireless connection in accordance with some embodiments.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein.

There currently exist certain challenge(s). A New Radio (NR) node triggers a User Equipment (UE) to perform inter-Radio Access Technology (RAT) handover to Evolved Universal Terrestrial Radio Access (E-UTRA) (i.e., to Long Term Evolution (LTE)) for normal mobility related reasons (going out of coverage of NR) or for voice fallback purposes. These two types of handovers from NR to LTE could involve different mobility decision making algorithms as they could be triggered based on different input information available to the source NR node.

Consider the following scenarios with different UEs:

### Scenario-1:

1. UE-1 is in Radio Resource Control (RRC) Connected state in NR Cell-A
2. UE-1 sends one or more measurement reports from which the network deduces that UE-1 is going out of coverage of NR and has LTE coverage available
3. NR Cell-A sends an inter-RAT handover command to send UE-1 to LTE Cell-B
4. UE-1 successfully completes a handover to LTE Cell-B
5. Shortly afterwards UE-1 declares a Radio Link Failure (RLF) in LTE Cell-B
6. UE-1 generates an RLF report in E-UTRA and indicates that the last source cell of the handover was NR Cell-A and it stayed a very short time in LTE Cell-B after such a handover.

### Scenario-2:

1. UE-2 is in RRC Inactive/RRC Idle state in NR Cell-A
2. There is a request for a voice call initiated towards the UE-2 and there is a need to send UE-2 to LTE
3. NR Cell-A pages UE-2
4. NR Cell initiates a handover (HO) towards an LTE cell, Cell-B, for voice fallback reasons immediately upon UE's transition to connected as there might not be enough time to configure and perform Radio Resource Management (RRM) measurements on LTE frequency
5. UE successfully completes a handover to LTE Cell-B
6. Shortly afterwards the UE declares RLF in LTE Cell-B
7. UE generates an RLF report in E-UTRA and indicates that the last source cell of the handover was NR Cell-A and it stayed a very short time in LTE Cell-B after such a handover.

Based on the current RLF report contents, the handover from Cell-A to Cell-B might be deemed 'too early' or 'handover to wrong cell'. However, based on the current RLF report contents, it is not possible to identify whether the previously completed handover was for voice fallback purpose or not. This is required to perform NR to LTE inter-RAT handover parameter optimization as the NR node might use different handover parameters for normal NR-LTE mobility against the voice fallback related NR-LTE mobility (because the amount of information available on the NR node is much less for scenario-2 compared to scenario-1).

Certain aspects of the disclosure and their embodiments may provide solutions to these or other challenges. Systems and methods disclosed herein relate to enhancement of an RLF report with an indication indicating whether the last successfully completed handover is a voice fallback related NR to LTE handover or other type of NR to LTE handover.

In another scenario, the UE includes an indication in an RLF report that the UE experienced a HO failure that led to suitable E-UTRA cell selection (due to the voice fallback configuration in MobilityFromNR command) before experiencing current RLF.

In one embodiment, a method performed by a UE comprises one or more of the following:
- Receiving a configuration from a first network node (e.g., a source NR network node) belonging to a first radio access technology to perform handover to a second network node (e.g., an LTE network node) belonging to a second radio access technology, the configuration comprising indication indicating voice fallback purpose (e.g., *MobilityFromNR* with voice fallback indication).
- Connecting to a cell served by the second network node
- Declaring radio link failure in the cell served by the second network node
- Storing a first set of information associated to the radio link failure in a first report, the first set of information comprising at least one or more of:
   ∘ An indication indicating whether the last completed handover from the first network node to the second network node was for voice fallback purpose.
In one embodiment, the first report is an RLF report. In one embodiment, the RLF report is logged and included in a VarRLF-Report. In one embodiment, once the UE selects a cell and succeeds with a reestablishment, the UE sends the RLF report to a respective network node. More specifically, in one embodiment, once the UE selects a cell and succeeds with a reestablishment, the UE includes an indication that it has an RLF report available in an RRC Reestablishment Complete message, which makes the target cell aware of that availability. Then, upon receiving an *UEInformationRequest* message with a flag (e.g., flag "rlf-ReportReq-r9"), the UE includes the RLF report (stored in a UE variable VarRLF-Report, as described above) in an *UEInformationResponse* message and sends the *UEInformationResponse* message to the network.

In another embodiment, a second method performed by a UE comprises one or more of the following:
- Receiving a configuration from a first network node (e.g., a source NR node) belonging to a first radio access technology to perform handover to a second network node (e.g., an LTE network node) belonging to a second radio access technology, the configuration comprising indication indicating voice fallback purpose (e.g., *MobilityFromNR* with voice fallback indication)
- Failure in connecting (e.g., failure in handover execution) toward a cell served by the second network node
- Finding a suitable E-UTRA cell due to being configured with voice fall back indication as part of received MobilityFromNR command and connecting to this selected EUTRA cell
- Declaring radio link failure in the selected E-UTRA cell after cell selection and connection to the selected E-UTRA cell
- Storing a first set of information associated to the radio link failure in a first report, the first set of information at least one or more of:
   ∘ An indication indicating that the serving cell that this RLF is occurred was selected as part of cell selection due to a voice fallback indication received as part of MobilityFromNR command.

In one embodiment, the first report is an RLF report. In one embodiment, the RLF report is logged and included in a VarRLF-Report. In one embodiment, once the UE selects a cell and succeeds with a reestablishment, the UE sends the RLF report to a respective network node. More specifically, in one embodiment, once the UE selects a cell and succeeds with a reestablishment, the UE includes an indication that it has an RLF report available in an RRC Reestablishment Complete message, which makes the target cell aware of that availability. Then, upon receiving an *UEInformationRequest* message with a flag (e.g., flag "rlf-ReportReq-r9"), the UE includes the RLF report (stored in a UE variable VarRLF-Report, as described above) in an *UEInformationResponse* message and sends the *UEInformationResponse* message to the network.

Certain embodiments may provide one or more of the following technical advantage(s). Based on the additional contents of the RLF report as proposed in the embodiments described herein, the network could identify whether the last completed handover was a voice fallback handover or not and thus, if such a handover is classified as too-early handover or handover-to-wrong cell, then the network node can optimize the voice fallback handover related mobility parameters.

In some embodiments, by including a flag in the RLF report that the UE failed in a handover that led to E-UTRA cell selection (due to the voice fallback indication/configuration in MobilityFromNR command) before the current RLF, the NR node realizes that the voice fallback procedure was not effective (even if successful) since the UE failed after selection and connection to an LTE cell after HO failure.

Systems and methods are disclosed herein that relate to enhancement of an RLF report with an indication indicating whether the last successfully completed handover is a voice fallback related RAT 1 (e.g., NR) to RAT 2 (e.g., LTE) handover or other type of RAT 1 (e.g., NR) to RAT 2 (e.g., LTE) handover.

In another scenario, a UE includes an indication in an RLF report that the UE experienced a HO failure that led to suitable EUTRA cell selection (due to the voice fallback configuration in MobilityFromNR command) before experiencing current RLF.

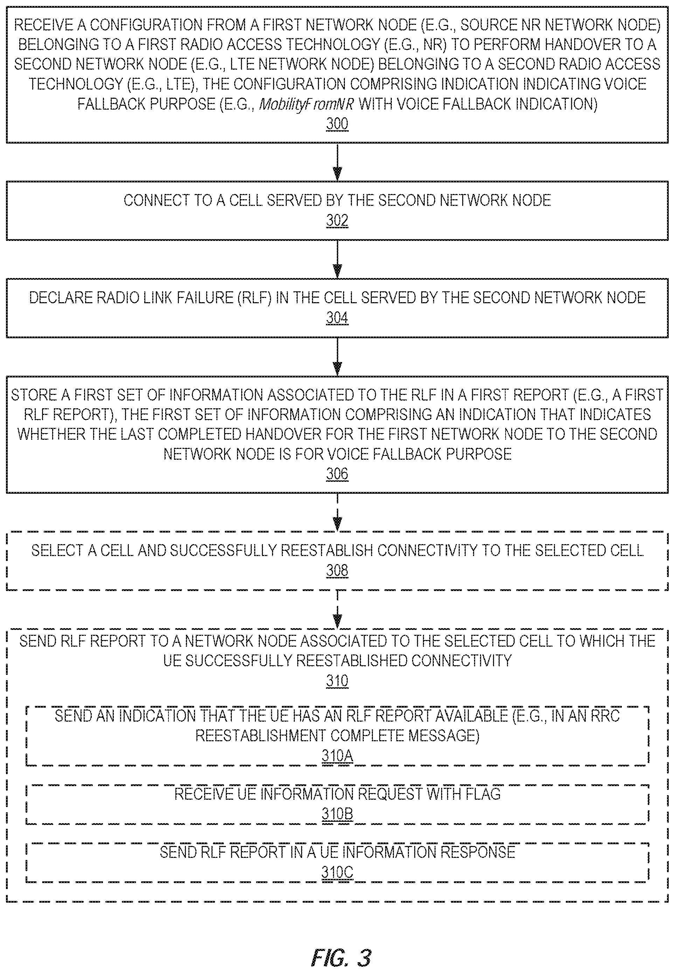

Figure 3 is a flow chart that illustrates the operation of a UE in accordance with one embodiment of the present disclosure. Optional steps are represented by dashed lines/boxes. As illustrated, the UE receives a configuration from a first network node (e.g., a source NR network node such as, e.g., a next generation Node B (gNB)) belonging to a first radio access technology (e.g., NR) to perform handover to a second network node (e.g., an LTE network node such as, e.g., an evolved or enhanced Node B (eNB)) belonging to a second radio access technology (e.g., LTE), the configuration comprising indication indicating voice fallback purpose (e.g., *MobilityFromNR* with voice fallback indication) (step 300).

The UE connects to a cell served by the second network node, in accordance with the received configuration (step 302). The UE declares RLF in the cell served by the second network node (step 304) and, responsive thereto, stores a first set of information associated to the RLF in a first report (e.g., an RLF report) (step 306). The first set of information comprises an indication that indicates whether the last completed handover from the first network node to the second network node was for voice fallback purpose. In this example, since the last completed handover was for voice fallback purpose, the indication indicates that the last completed handover from the first network node to the second network node was for voice fallback purpose. In one embodiment, the first report is an RLF report. In one embodiment, the RLF report is logged and included in a VarRLF-Report (in step 306).

In one embodiment, the UE selects a cell and succeeds with a reestablishment to the selected cell (step 308) and sends the RLF report to a respective network node (step 310). More specifically, in one embodiment, once the UE selects a cell and succeeds with a reestablishment, the UE includes an indication that it has an RLF report available in an RRC Reestablishment Complete message (step 310A), which makes the target cell aware of that availability. Then, upon receiving an *UEInformationRequest* message with a flag (e.g., flag "rlf-ReportReq-r9") (step 310B), the UE includes the RLF report (stored in a UE variable VarRLF-Report, as described above) in an *UEInformationResponse* message and sends the *UEInformationResponse* message to the network (step 310C).

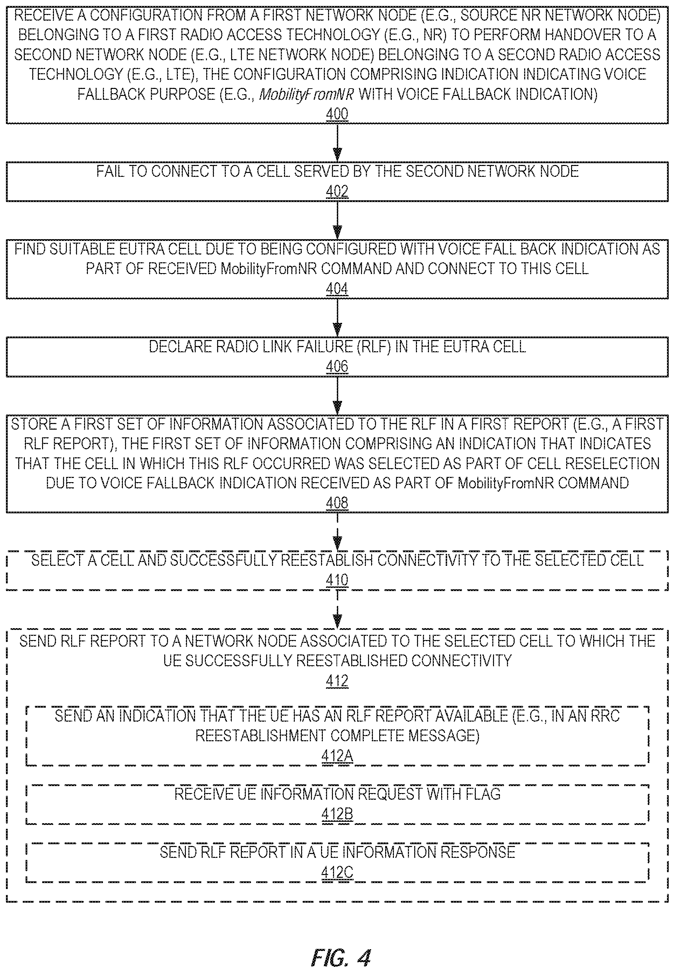

Figure 4 is a flow chart that illustrates the operation of a UE in accordance with another embodiment of the present disclosure. Optional steps are represented by dashed lines/boxes. As illustrated, the UE receives a configuration from a first network node (e.g., a source NR network node such as, e.g., a gNB) belonging to a first radio access technology (e.g., NR) to perform handover to a second network node (e.g., an LTE network node such as, e.g., a gNB) belonging to a second radio access technology (e.g., LTE), the configuration comprising indication indicating voice fallback purpose (e.g., *MobilityFromNR* with voice fallback indication) (step 400). The UE fails to connect (e.g., failure in handover execution) toward a cell served by the second network node (step 402). The UE finds a suitable EUTRA cell due to being configured with voice fall back indication as part of received MobilityFromNR command and connects to this selected EUTRA cell (step 404).

The UE declares an RLF in the selected EUTRA cell after cell selection and connection to the selected EUTRA cell (step 406). In response thereto, the UE stores a first set of information associated to the RLF in a first report (step 408). The first set of information comprises at least an indication indicating that the serving cell in which this RLF occurred was selected as part of cell selection due to a voice fallback indication received as part of MobilityFromNR command. In one embodiment, the first report is an RLF report. In one embodiment, the RLF report is logged and included in a VarRLF-Report (in step 408).

In one embodiment, the UE selects a cell and succeeds with a reestablishment to the selected cell (step 410) and sends the RLF report to a respective network node (step 412). More specifically, in one embodiment, once the UE selects a cell and succeeds with a reestablishment, the UE includes an indication that it has an RLF report available in an RRC Reestablishment Complete message (step 412A), which makes the target cell aware of that availability. Then, upon receiving an *UEInformationRequest* message with a flag (e.g., flag "rlf-ReportReq-r9") (step 412B), the UE includes the RLF report (stored in a UE variable VarRLF-Report, as described above) in an *UEInformationResponse* message and sends the *UEInformationResponse* message to the network (step 412C).

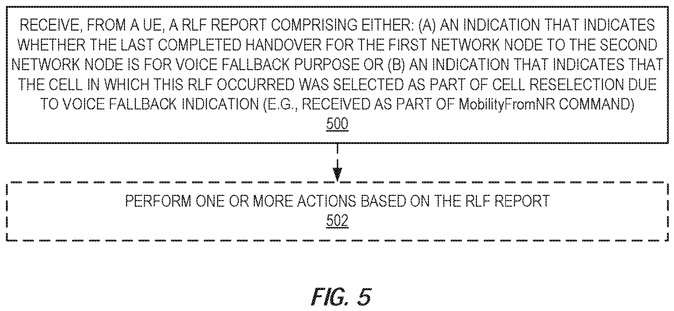

Figure 5 is a flow chart that illustrates the operation of a network node (e.g., a base station such as, e.g., an gNB or eNB) in accordance with one embodiment of the present disclosure. Optional steps are represented by dashed lines/boxes. As illustrated, the network node receives, from a UE, an RLF report comprising either: (a) an indication that a last completed handover for a first network node to a second network node was for voice fallback purpose or (b) an indication that a cell in which the radio link failure has occurred was selected as part of cell reselection due to voice fallback indication (step 500). The network node may then perform one or more actions based on the RLF report (step 502). The one or more actions may include, e.g., sending the RLF report or information from the RLF report to one or more other network nodes (e.g., the first network node). Based on the RLF report, the network (e.g., the network node or some other network node to which the RLF report or information contained in the RLF report is sent) could, e.g., identify whether the last completed handover was a voice fallback handover or not and thus, if such a handover is classified as too-early handover or handover-to-wrong cell, then the network can optimize the voice fallback handover related mobility parameters. In some embodiments, by including a flag in the RLF report that the UE failed in a handover that led to EUTRA cell selection (due to the voice fallback indication/configuration in MobilityFromNR command) before the current RLF, the NR node realizes that the voice fallback procedure was not effective (even if successful) since the UE failed after selection and connection to an LTE cell after HO failure and, e.g., one or more appropriate actions may be taken.

An example implementation is given below (TS 36.331 v17.0.0 is taken as the baseline and additions are shown with bold, underlined text).

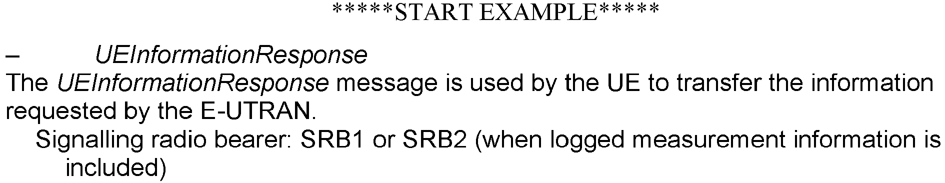

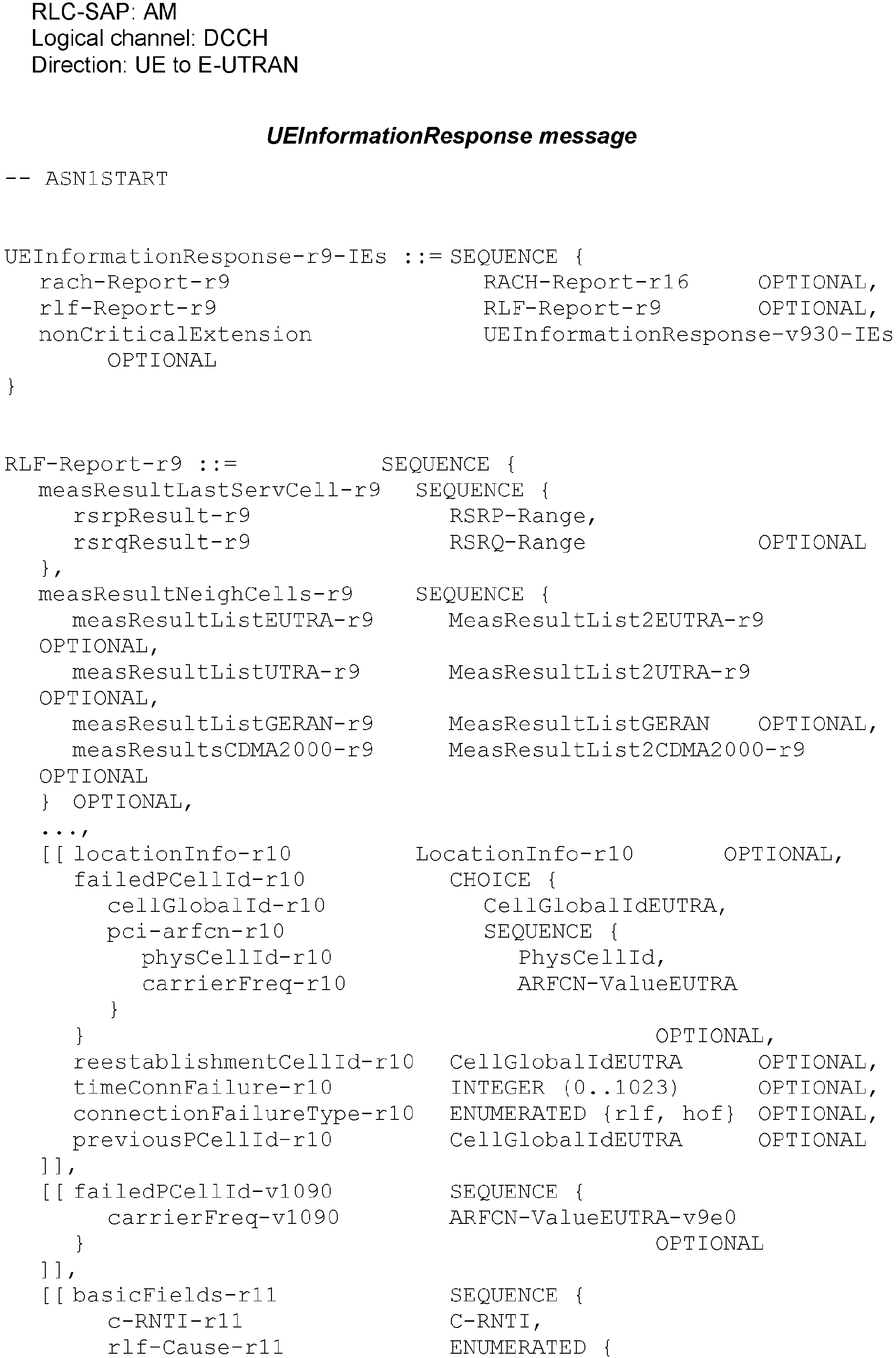

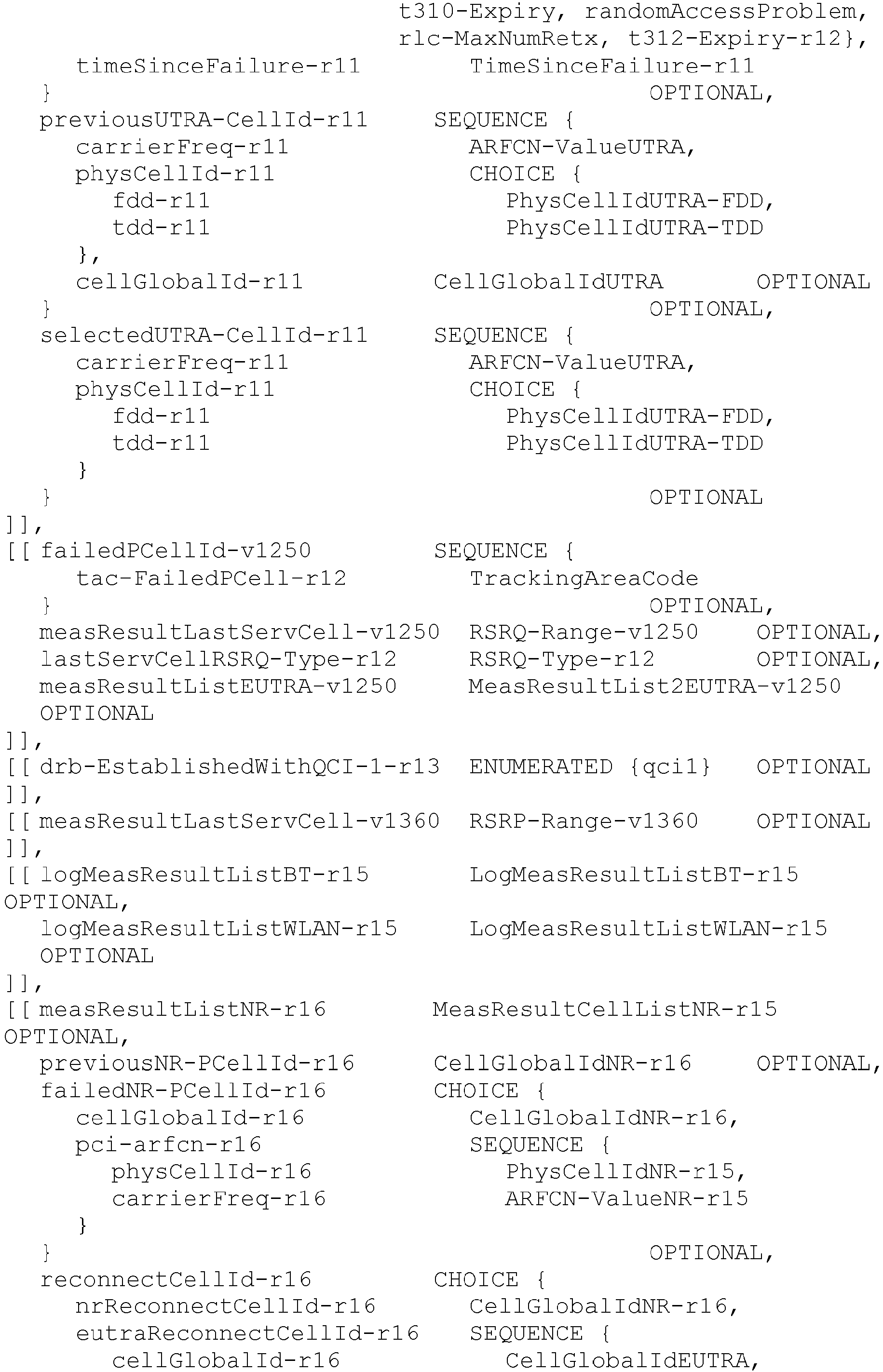

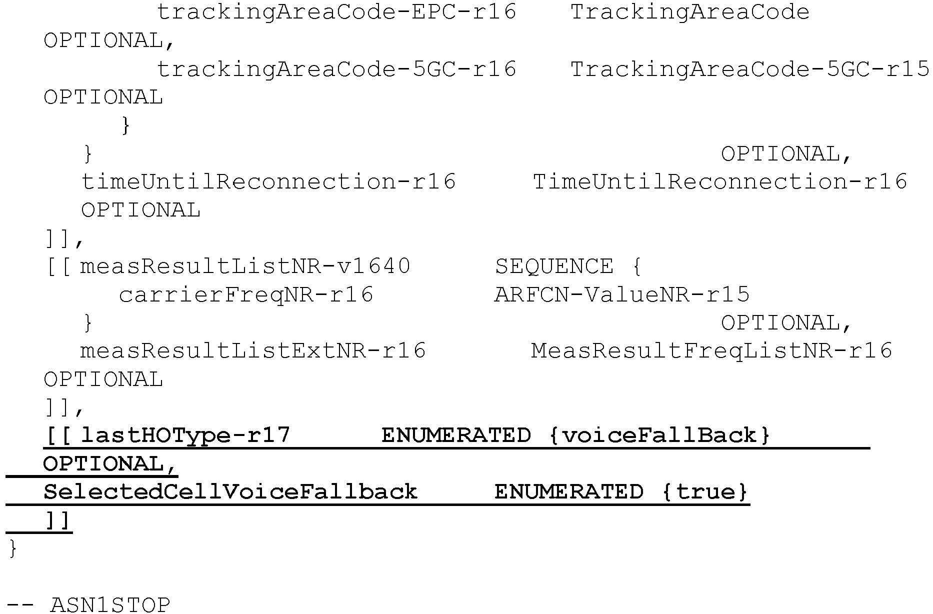

| ***UEInformationResponse* field descriptions** |
|---|
| ***lastHOType*** |
| This field is set to *voiceFallBack* upon declaring RLF, if the last successfully completed handover is from NR to LTE and was performed for voice fallback purposes. |

| ***SelectedCellVoiceFallback*** |
|---|
| This field is used to indicate that the failed cell is selected as part of EUTRA cell selection performed after a MobilityFromNR failure with a voicefallback indication. |

### 5.3.11.3 Detection of radio link failure

The UE shall:
1>in case any DAPS bearer is configured, only the target PCell is considered in the following;
1 >upon T310 expiry; or
1>upon T312 expiry; or
1>upon T318 expiry; or
1>upon random access problem indication from MCG MAC while neither T300, T301, T304 nor T311 is running; or
1>upon indication from MCG RLC, which is allowed to be send on PCell, that the maximum number of retransmissions has been reached for an SRB or DRB:
   2>consider radio link failure to be detected for the MCG i.e. RLF;
   2>discard any segments of segmented RRC messages received;
   2>store the following radio link failure information in the *VarRLF-Report (VarRLF-Report-NB* in NB-IoT) by setting its fields as follows:
      3>clear the information included in *VarRLF-Report (VarRLF-Report-NB* in NB-IoT), if any;
      3>set the *plmn-IdentityList* to include the list of EPLMNs stored by the UE (i.e. includes the RPLMN);
      3>set the *measResultLastServCell* to include the RSRP and RSRQ, if available, of the PCell based on measurements collected up to the moment the UE detected radio link failure;
      3>except for NB-loT, set the *measResultNeighCells* to include the best measured cells, other than the PCell, ordered such that the best cell is listed first, and based on measurements collected up to the moment the UE detected radio link failure, and set its fields as follows;
         4>if the UE was configured to perform measurements for one or more EUTRA frequencies, include the *measResultListEUTRA*;
         4>if the UE was configured to perform measurement reporting for one or more neighbouring UTRA frequencies, include the *measResultListUTRA*;
         4>if the UE was configured to perform measurement reporting for one or more neighbouring GERAN frequencies, include the *measResultListGERAN;*
         4>if the UE was configured to perform measurement reporting for one or more neighbouring CDMA2000 frequencies, include the *measResultsCDMA2000*;
         4>if the UE was configured to perform measurement reporting, not related to NR sidelink communication, for one or more neighbouring NR frequencies, include the *measResultListNR*;
         4>for each neighbour cell included, include the optional fields that are available;
1> NOTE 1: The measured quantities are filtered by the L3 filter as configured in the mobility measurement configuration. The measurements are based on the time domain measurement resource restriction, if configured. Excludelisted cells are not required to be reported.
   3>except for NB-loT, if available, set the *logMeasResultListWLAN* to include the WLAN measurement results, in order of decreasing RSSI for WLAN APs;
   3>except for NB-loT, if available, set the *logMeasResultListBT* to include the Bluetooth measurement results, in order of decreasing RSSI for Bluetooth beacons;
   3> if detailed location information is available, set the content of the *locationInfo* as follows:
      4> include the *locationCoordinates*;
      4> include the *horizontalVelocity,* if available;
   3>set the *failedPCellId* to the global cell identity, if available, and otherwise , except for NB-loT, to the physical cell identity and carrier frequency of the PCell where radio link failure is detected;
   3>except for NB-loT, set the *tac-FailedPCell* to the tracking area code, if available, of the PCell where radio link failure is detected;
   3>except for NB-loT, if an *RRCConnectionReconfiguration* message including the *mobilityControllnfo* was received before the connection failure:
      4>if the last *RRCConnectionReconfiguration* message including the *mobilityControllnfo* concerned an intra E-UTRA handover:
         5> include the *previousPCellId* and set it to the global cell identity of the PCell where the last *RRCConnectionReconfiguration* message including *mobilityControllnfo* was received;
         5>set the *timeConnFailure* to the elapsed time since reception of the last *RRCConnectionReconfiguration* message including the *mobilityControlInfo*;
      4>if the last *RRCConnectionReconfiguration* message including the *mobilityControllnfo* concerned a handover to E-UTRA from UTRA and if the UE supports Radio Link Failure Report for Inter-RAT MRO:
         5> include the *previousUTRA-CellId* and set it to the physical cell identity, the carrier frequency and the global cell identity, if available, of the UTRA Cell in which the last *RRCConnectionReconfiguration* message including *mobilityControllnfo* was received;
         5>set the *timeConnFailure* to the elapsed time since reception of the last *RRCConnectionReconfiguration* message including the *mobilityControlInfo*;
      4>if the last *RRCConnectionReconfiguration* message including the *mobilityControllnfo* concerned a handover to E-UTRA from NR and if the UE supports Radio Link Failure Report for Inter-RAT MRO NR:
         5> include the *previousNR-PCellId* and set it to the global cell identity of the PCell where the last *RRCConnectionReconfiguration* message including *mobilityControllnfo* was received embedded in NR RRC message *MobilityFromNRCommand* message as specified in TS 38.331 [82] clause 5.4.3.3;
         5>set the *timeConnFailure* to the elapsed time since reception of the last *RRCConnectionReconfiguration* message including the *mobilityControllnfo* embedded in NR RRC message *MobilityFromNRCommand* message as specified in TS 38.331 [82] clause 5.4.3.3;
         **5>if *voiceFallbackIndication* is set to *true* in the *MobilityFromNRCommand* that carried *RRCConnectionReconfiguration* message including the *mobilityControlInfo*:**
            **6> set *lastHOType* to *voiceFallBack.***
         **5>if the failed cell was selected after a failure of a *MobilityFromNRCommand* that carried *RRCConnectionReconfiguration message* with *voiceFallbackIndication* set to *true* (suitable EUTRA cell selection due to *voiceFallBackIndication*):**
            **6> set *SelectedCellVoiceFallback* to *true.***
   3>except for NB-loT, if the UE supports QCI1 indication in Radio Link Failure Report and has a DRB for which QCI is 1:
      4>include the *drb-EstablishedWithQCI-1*;
   3>except for NB-loT, set the *connectionFailureType* to *rlf*;
   3>except for NB-loT, set the *c-RNTI* to the C-RNTI used in the PCell;
   3>except for NB-loT, set the *rlf-Cause* to the trigger for detecting radio link failure;

   2>if the UE is configured with (NG)EN-DC; and
   2>if T316 is configured; and
   2>if SCG transmission is not suspended; and
   2>if neither NR PSCell change nor NR PSCell addition is ongoing (i.e. T304 for the NR PSCell is not running as specified in TS 38.331 [82], clause 5.3.5.5.2, in (NG)EN-DC):
      3> initiate the MCG failure information procedure as specified in 5.6.26 to report MCG radio link failure;
   2>else:
      3> if AS security has not been activated:
         4>if the UE is a NB-loT UE:
            5>if the UE is connected to EPC and the UE supports RRC connection reestablishment for the Control Plane CloT EPS optimisation; or
            5>if the UE is connected to 5GC, the UE supports RRC connection reestablishment for the Control Plane CloT 5GS optimisation and the UE is configured with a truncated 5G-S-TMSI:
               6> initiate the RRC connection re-establishment procedure as specified in 5.3.7;
            5>else:
               6>perform the actions upon leaving RRC_CONNECTED as specified in 5.3.12, with release cause 'RRC connection failure';
         4>else:
            5>perform the actions upon leaving RRC_CONNECTED as specified in 5.3.12, with release cause 'other';
      3>else:
         4>initiate the connection re-establishment procedure as specified in 5.3.7;
...

### *****END EXAMPLE*****

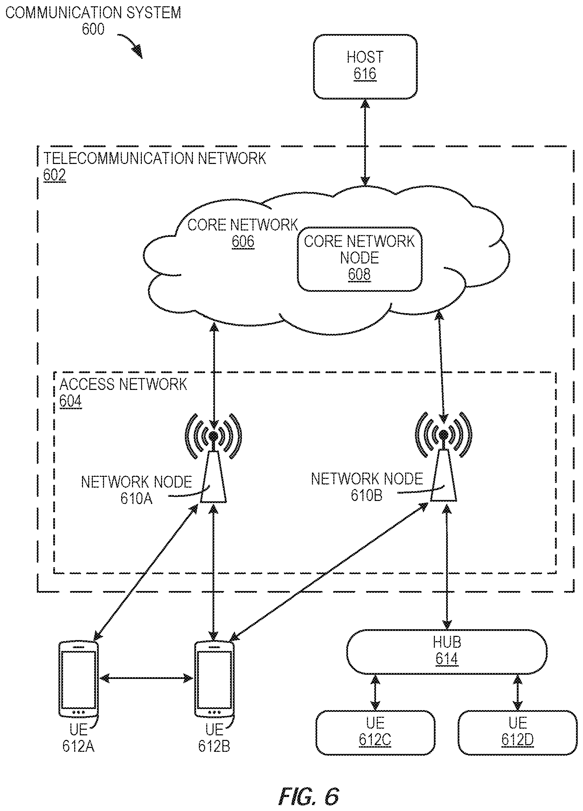

Figure 6 shows an example of a communication system 600 in which embodiments of the present disclosure may be implemented

In the example, the communication system 600 includes a telecommunication network 602 that includes an access network 604, such as a Radio Access Network (RAN), and a core network 606, which includes one or more core network nodes 608. The access network 604 includes one or more access network nodes, such as network nodes 610A and 610B (one or more of which may be generally referred to as network nodes 610), or any other similar Third Generation Partnership Project (3GPP) access node or non-3GPP Access Point (AP). The network nodes 610 facilitate direct or indirect connection of User Equipment (UE), such as by connecting UEs 612A, 612B, 612C, and 612D (one or more of which may be generally referred to as UEs 612) to the core network 606 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 600 may include any number of wired or wireless networks, network nodes, UEs, and/or any other components or systems that may facilitate or participate in the communication of data and/or signals whether via wired or wireless connections. The communication system 600 may include and/or interface with any type of communication, telecommunication, data, cellular, radio network, and/or other similar type of system.

The UEs 612 may be any of a wide variety of communication devices, including wireless devices arranged, configured, and/or operable to communicate wirelessly with the network nodes 610 and other communication devices. Similarly, the network nodes 610 are arranged, capable, configured, and/or operable to communicate directly or indirectly with the UEs 612 and/or with other network nodes or equipment in the telecommunication network 602 to enable and/or provide network access, such as wireless network access, and/or to perform other functions, such as administration in the telecommunication network 602.

In the depicted example, the core network 606 connects the network nodes 610 to one or more hosts, such as host 616. These connections may be direct or indirect via one or more intermediary networks or devices. In other examples, network nodes may be directly coupled to hosts. The core network 606 includes one more core network nodes (e.g., core network node 608) that are structured with hardware and software components. Features of these components may be substantially similar to those described with respect to the UEs, network nodes, and/or hosts, such that the descriptions thereof are generally applicable to the corresponding components of the core network node 608. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-Concealing Function (SIDF), Unified Data Management (UDM), Security Edge Protection Proxy (SEPP), Network Exposure Function (NEF), and/or a User Plane Function (UPF).

The host 616 may be under the ownership or control of a service provider other than an operator or provider of the access network 604 and/or the telecommunication network 602, and may be operated by the service provider or on behalf of the service provider. The host 616 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 600 of Figure 6 enables connectivity between the UEs, network nodes, and hosts. In that sense, the communication system 600 may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable Second, Third, Fourth, or Fifth Generation (2G, 3G, 4G, or 5G) standards, or any applicable future generation standard (e.g., Sixth Generation (6G)); Wireless Local Area Network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any Low Power Wide Area Network (LPWAN) standards such as LoRa and Sigfox.

In some examples, the telecommunication network 602 is a cellular network that implements 3GPP standardized features. Accordingly, the telecommunication network 602 may support network slicing to provide different logical networks to different devices that are connected to the telecommunication network 602. For example, the telecommunication network 602 may provide Ultra Reliable Low Latency Communication (URLLC) services to some UEs, while providing enhanced Mobile Broadband (eMBB) services to other UEs, and/or massive Machine Type Communication (mMTC)/massive Internet of Things (IoT) services to yet further UEs.

In some examples, the UEs 612 are configured to transmit and/or receive information without direct human interaction. For instance, a UE may be designed to transmit information to the access network 604 on a predetermined schedule, when triggered by an internal or external event, or in response to requests from the access network 604. Additionally, a UE may be configured for operating in single- or multi-Radio Access Technology (RAT) or multi-standard mode. For example, a UE may operate with any one or combination of WiFi, New Radio (NR), and LTE, i.e. be configured for Multi-Radio Dual Connectivity (MR-DC), such as Evolved UMTS Terrestrial RAN (E-UTRAN) NR - Dual Connectivity (EN-DC).

In the example, a hub 614 communicates with the access network 604 to facilitate indirect communication between one or more UEs (e.g., UE 612C and/or 612D) and network nodes (e.g., network node 610B). In some examples, the hub 614 may be a controller, router, content source and analytics, or any of the other communication devices described herein regarding UEs. For example, the hub 614 may be a broadband router enabling access to the core network 606 for the UEs. As another example, the hub 614 may be a controller that sends commands or instructions to one or more actuators in the UEs. Commands or instructions may be received from the UEs, network nodes 610, or by executable code, script, process, or other instructions in the hub 614. As another example, the hub 614 may be a data collector that acts as temporary storage for UE data and, in some embodiments, may perform analysis or other processing of the data. As another example, the hub 614 may be a content source. For example, for a UE that is a Virtual Reality (VR) headset, display, loudspeaker or other media delivery device, the hub 614 may retrieve VR assets, video, audio, or other media or data related to sensory information via a network node, which the hub 614 then provides to the UE either directly, after performing local processing, and/or after adding additional local content. In still another example, the hub 614 acts as a proxy server or orchestrator for the UEs, in particular in if one or more of the UEs are low energy IoT devices.

The hub 614 may have a constant/persistent or intermittent connection to the network node 610B. The hub 614 may also allow for a different communication scheme and/or schedule between the hub 614 and UEs (e.g., UE 612C and/or 612D), and between the hub 614 and the core network 606. In other examples, the hub 614 is connected to the core network 606 and/or one or more UEs via a wired connection. Moreover, the hub 614 may be configured to connect to a Machine-to-Machine (M2M) service provider over the access network 604 and/or to another UE over a direct connection. In some scenarios, UEs may establish a wireless connection with the network nodes 610 while still connected via the hub 614 via a wired or wireless connection. In some embodiments, the hub 614 may be a dedicated hub - that is, a hub whose primary function is to route communications to/from the UEs from/to the network node 610B. In other embodiments, the hub 614 may be a non-dedicated hub - that is, a device which is capable of operating to route communications between the UEs and the network node 610B, but which is additionally capable of operating as a communication start and/or end point for certain data channels.

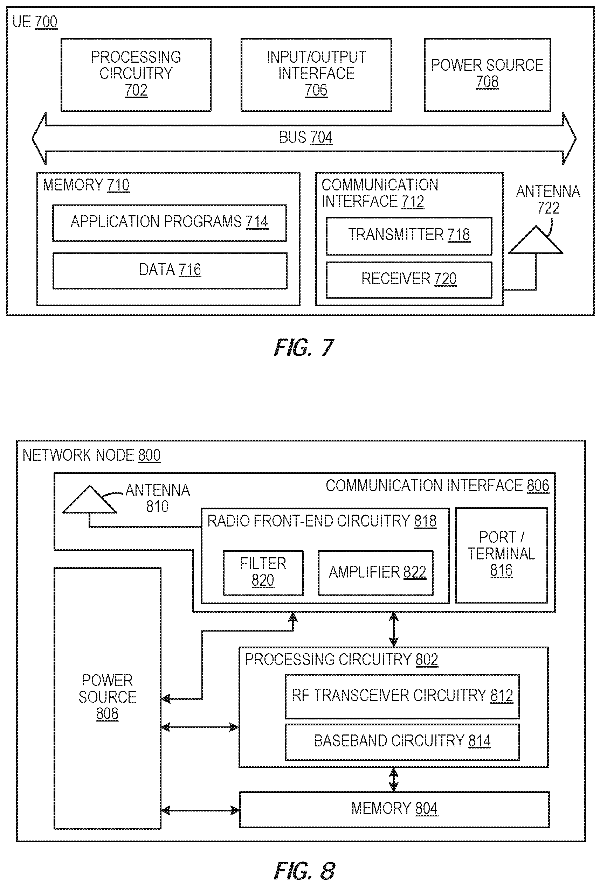

Figure 7 shows a UE 700 in accordance with some embodiments. As used herein, a UE refers to a device capable, configured, arranged, and/or operable to communicate wirelessly with network nodes and/or other UEs. Examples of a UE include, but are not limited to, a smart phone, mobile phone, cell phone, Voice over Internet Protocol (VoIP) phone, wireless local loop phone, desktop computer, Personal Digital Assistant (PDA), wireless camera, gaming console or device, music storage device, playback appliance, wearable terminal device, wireless endpoint, mobile station, tablet, laptop, Laptop Embedded Equipment (LEE), Laptop Mounted Equipment (LME), smart device, wireless Customer Premise Equipment (CPE), vehicle-mounted or vehicle embedded/integrated wireless device, etc. Other examples include any UE identified by the 3GPP, including a Narrowband Internet of Things (NB-IoT) UE, a Machine Type Communication (MTC) UE, and/or an enhanced MTC (eMTC) UE.

A UE may support Device-to-Device (D2D) communication, for example by implementing a 3GPP standard for sidelink communication, Dedicated Short-Range Communication (DSRC), Vehicle-to-Vehicle (V2V), Vehicle-to-Infrastructure (V2I), or Vehicle-to-Everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 700 includes processing circuitry 702 that is operatively coupled via a bus 704 to an input/output interface 706, a power source 708, memory 710, a communication interface 712, and/or any other component, or any combination thereof. Certain UEs may utilize all or a subset of the components shown in Figure 7. The level of integration between the components may vary from one UE to another UE. Further, certain UEs may contain multiple instances of a component, such as multiple processors, memories, transceivers, transmitters, receivers, etc.

The processing circuitry 702 is configured to process instructions and data and may be configured to implement any sequential state machine operative to execute instructions stored as machine-readable computer programs in the memory 710. The processing circuitry 702 may be implemented as one or more hardware-implemented state machines (e.g., in discrete logic, Field Programmable Gate Arrays (FPGAs), Application Specific Integrated Circuits (ASICs), etc.); programmable logic together with appropriate firmware; one or more stored computer programs, general purpose processors, such as a microprocessor or Digital Signal Processor (DSP), together with appropriate software; or any combination of the above. For example, the processing circuitry 702 may include multiple Central Processing Units (CPUs).

In the example, the input/output interface 706 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 700. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 708 is structured as a battery or battery pack. Other types of power sources, such as an external power source (e.g., an electricity outlet), photovoltaic device, or power cell, may be used. The power source 708 may further include power circuitry for delivering power from the power source 708 itself, and/or an external power source, to the various parts of the UE 700 via input circuitry or an interface such as an electrical power cable. Delivering power may be, for example, for charging the power source 708. Power circuitry may perform any formatting, converting, or other modification to the power from the power source 708 to make the power suitable for the respective components of the UE 700 to which power is supplied.

The memory 710 may be or be configured to include memory such as Random Access Memory (RAM), Read Only Memory (ROM), Programmable ROM (PROM), Erasable PROM (EPROM), Electrically EPROM (EEPROM), magnetic disks, optical disks, hard disks, removable cartridges, flash drives, and so forth. In one example, the memory 710 includes one or more application programs 714, such as an operating system, web browser application, a widget, gadget engine, or other application, and corresponding data 716. The memory 710 may store, for use by the UE 700, any of a variety of various operating systems or combinations of operating systems.

The memory 710 may be configured to include a number of physical drive units, such as Redundant Array of Independent Disks (RAID), flash memory, USB flash drive, external hard disk drive, thumb drive, pen drive, key drive, High Density Digital Versatile Disc (HD-DVD) optical disc drive, internal hard disk drive, Blu-Ray optical disc drive, Holographic Digital Data Storage (HDDS) optical disc drive, external mini Dual In-line Memory Module (DIMM), Synchronous Dynamic RAM (SDRAM), external micro-DIMM SDRAM, smartcard memory such as a tamper resistant module in the form of a Universal Integrated Circuit Card (UICC) including one or more Subscriber Identity Modules (SIMs), such as a Universal SIM (USIM) and/or Internet Protocol Multimedia Services Identity Module (ISIM), other memory, or any combination thereof. The UICC may for example be an embedded UICC (eUICC), integrated UICC (iUICC) or a removable UICC commonly known as a 'SIM card.' The memory 710 may allow the UE 700 to access instructions, application programs, and the like stored on transitory or non-transitory memory media, to off-load data, or to upload data. An article of manufacture, such as one utilizing a communication system, may be tangibly embodied as or in the memory 710, which may be or comprise a device-readable storage medium.

The processing circuitry 702 may be configured to communicate with an access network or other network using the communication interface 712. The communication interface 712 may comprise one or more communication subsystems and may include or be communicatively coupled to an antenna 722. The communication interface 712 may include one or more transceivers used to communicate, such as by communicating with one or more remote transceivers of another device capable of wireless communication (e.g., another UE or a network node in an access network). Each transceiver may include a transmitter 718 and/or a receiver 720 appropriate to provide network communications (e.g., optical, electrical, frequency allocations, and so forth). Moreover, the transmitter 718 and receiver 720 may be coupled to one or more antennas (e.g., the antenna 722) and may share circuit components, software, or firmware, or alternatively be implemented separately.

In the illustrated embodiment, communication functions of the communication interface 712 may include cellular communication, WiFi communication, LPWAN communication, data communication, voice communication, multimedia communication, short-range communications such as Bluetooth, NFC, location-based communication such as the use of the Global Positioning System (GPS) to determine a location, another like communication function, or any combination thereof. Communications may be implemented according to one or more communication protocols and/or standards, such as IEEE 802.11, Code Division Multiplexing Access (CDMA), Wideband CDMA (WCDMA), GSM, LTE, NR, UMTS, WiMax, Ethernet, Transmission Control Protocol/Internet Protocol (TCP/IP), Synchronous Optical Networking (SONET), Asynchronous Transfer Mode (ATM), Quick User Datagram Protocol Internet Connection (QUIC), Hypertext Transfer Protocol (HTTP), and so forth.

Regardless of the type of sensor, a UE may provide an output of data captured by its sensors, through its communication interface 712, or via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application, and healthcare. Non-limiting examples of such an IoT device are a device which is or which is embedded in: a connected refrigerator or freezer, a television, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or VR, a wearable for tactile augmentation or sensory enhancement, a water sprinkler, an animal- or itemtracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 700 shown in Figure 7.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship, an airplane, or other equipment that is capable of monitoring and/or reporting on its operational status or other functions associated with its operation.

In practice, any number of UEs may be used together with respect to a single use case. For example, a first UE might be, or be integrated in, a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator and handle communication of data for both the speed sensor and the actuators.

Figure 8 shows a network node 800 in accordance with some embodiments. As used herein, network node refers to equipment capable, configured, arranged, and/or operable to communicate directly or indirectly with a UE and/or with other network nodes or equipment in a telecommunication network. Examples of network nodes include, but are not limited to, APs (e.g., radio APs), Base Stations (BSs) (e.g., radio BSs, Node Bs, evolved Node Bs (eNBs), and NR Node Bs (gNBs)).

BSs may be categorized based on the amount of coverage they provide (or, stated differently, their transmit power level) and so, depending on the provided amount of coverage, may be referred to as femto BSs, pico BSs, micro BSs, or macro BSs. A BS may be a relay node or a relay donor node controlling a relay. A network node may also include one or more (or all) parts of a distributed radio BS such as centralized digital units and/or Remote Radio Units (RRUs), sometimes referred to as Remote Radio Heads (RRHs). Such RRUs may or may not be integrated with an antenna as an antenna integrated radio. Parts of a distributed radio BS may also be referred to as nodes in a Distributed Antenna System (DAS).

Other examples of network nodes include multiple Transmission Point (multi-TRP) 5G access nodes, Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 800 includes processing circuitry 802, memory 804, a communication interface 806, and a power source 808. The network node 800 may be composed of multiple physically separate components (e.g., a Node B component and an RNC component, or a BTS component and a BSC component, etc.), which may each have their own respective components. In certain scenarios in which the network node 800 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 800 may be configured to support multiple RATs. In such embodiments, some components may be duplicated (e.g., separate memory 804 for different RATs) and some components may be reused (e.g., an antenna 810 may be shared by different RATs). The network node 800 may also include multiple sets of the various illustrated components for different wireless technologies integrated into network node 800, for example GSM, WCDMA, LTE, NR, WiFi, Zigbee, Z-wave, Long Range Wide Area Network (LoRaWAN), Radio Frequency Identification (RFID), or Bluetooth wireless technologies. These wireless technologies may be integrated into the same or different chip or set of chips and other components within the network node 800.

The processing circuitry 802 may comprise a combination of one or more of a microprocessor, controller, microcontroller, CPU, DSP, ASIC, FPGA, or any other suitable computing device, resource, or combination of hardware, software, and/or encoded logic operable to provide, either alone or in conjunction with other network node 800 components, such as the memory 804, to provide network node 800 functionality.

In some embodiments, the processing circuitry 802 includes a System on a Chip (SOC). In some embodiments, the processing circuitry 802 includes one or more of Radio Frequency (RF) transceiver circuitry 812 and baseband processing circuitry 814. In some embodiments, the RF transceiver circuitry 812 and the baseband processing circuitry 814 may be on separate chips (or sets of chips), boards, or units, such as radio units and digital units. In alternative embodiments, part or all of the RF transceiver circuitry 812 and the baseband processing circuitry 814 may be on the same chip or set of chips, boards, or units.

The memory 804 may comprise any form of volatile or non-volatile computer-readable memory including, without limitation, persistent storage, solid state memory, remotely mounted memory, magnetic media, optical media, RAM, ROM, mass storage media (for example, a hard disk), removable storage media (for example, a flash drive, a Compact Disk (CD), or a Digital Video Disk (DVD)), and/or any other volatile or non-volatile, non-transitory device-readable, and/or computer-executable memory devices that store information, data, and/or instructions that may be used by the processing circuitry 802. The memory 804 may store any suitable instructions, data, or information, including a computer program, software, an application including one or more of logic, rules, code, tables, and/or other instructions capable of being executed by the processing circuitry 802 and utilized by the network node 800. The memory 804 may be used to store any calculations made by the processing circuitry 802 and/or any data received via the communication interface 806. In some embodiments, the processing circuitry 802 and the memory 804 are integrated.

The communication interface 806 is used in wired or wireless communication of signaling and/or data between a network node, access network, and/or UE. As illustrated, the communication interface 806 comprises port(s)/terminal(s) 816 to send and receive data, for example to and from a network over a wired connection. The communication interface 806 also includes radio front-end circuitry 818 that may be coupled to, or in certain embodiments a part of, the antenna 810. The radio front-end circuitry 818 comprises filters 820 and amplifiers 822. The radio front-end circuitry 818 may be connected to the antenna 810 and the processing circuitry 802. The radio front-end circuitry 818 may be configured to condition signals communicated between the antenna 810 and the processing circuitry 802. The radio front-end circuitry 818 may receive digital data that is to be sent out to other network nodes or UEs via a wireless connection. The radio front-end circuitry 818 may convert the digital data into a radio signal having the appropriate channel and bandwidth parameters using a combination of the filters 820 and/or the amplifiers 822. The radio signal may then be transmitted via the antenna 810. Similarly, when receiving data, the antenna 810 may collect radio signals which are then converted into digital data by the radio front-end circuitry 818. The digital data may be passed to the processing circuitry 802. In other embodiments, the communication interface 806 may comprise different components and/or different combinations of components.

In certain alternative embodiments, the network node 800 does not include separate radio front-end circuitry 818; instead, the processing circuitry 802 includes radio front-end circuitry and is connected to the antenna 810. Similarly, in some embodiments, all or some of the RF transceiver circuitry 812 is part of the communication interface 806. In still other embodiments, the communication interface 806 includes the one or more ports or terminals 816, the radio front-end circuitry 818, and the RF transceiver circuitry 812 as part of a radio unit (not shown), and the communication interface 806 communicates with the baseband processing circuitry 814, which is part of a digital unit (not shown).

The antenna 810 may include one or more antennas, or antenna arrays, configured to send and/or receive wireless signals. The antenna 810 may be coupled to the radio front-end circuitry 818 and may be any type of antenna capable of transmitting and receiving data and/or signals wirelessly. In certain embodiments, the antenna 810 is separate from the network node 800 and connectable to the network node 800 through an interface or port.

The antenna 810, the communication interface 806, and/or the processing circuitry 802 may be configured to perform any receiving operations and/or certain obtaining operations described herein as being performed by the network node 800. Any information, data, and/or signals may be received from a UE, another network node, and/or any other network equipment. Similarly, the antenna 810, the communication interface 806, and/or the processing circuitry 802 may be configured to perform any transmitting operations described herein as being performed by the network node 800. Any information, data, and/or signals may be transmitted to a UE, another network node, and/or any other network equipment.

The power source 808 provides power to the various components of the network node 800 in a form suitable for the respective components (e.g., at a voltage and current level needed for each respective component). The power source 808 may further comprise, or be coupled to, power management circuitry to supply the components of the network node 800 with power for performing the functionality described herein. For example, the network node 800 may be connectable to an external power source (e.g., the power grid or an electricity outlet) via input circuitry or an interface such as an electrical cable, whereby the external power source supplies power to power circuitry of the power source 808. As a further example, the power source 808 may comprise a source of power in the form of a battery or battery pack which is connected to, or integrated in, power circuitry. The battery may provide backup power should the external power source fail.

Embodiments of the network node 800 may include additional components beyond those shown in Figure 8 for providing certain aspects of the network node's functionality, including any of the functionality described herein and/or any functionality necessary to support the subject matter described herein. For example, the network node 800 may include user interface equipment to allow input of information into the network node 800 and to allow output of information from the network node 800. This may allow a user to perform diagnostic, maintenance, repair, and other administrative functions for the network node 800.

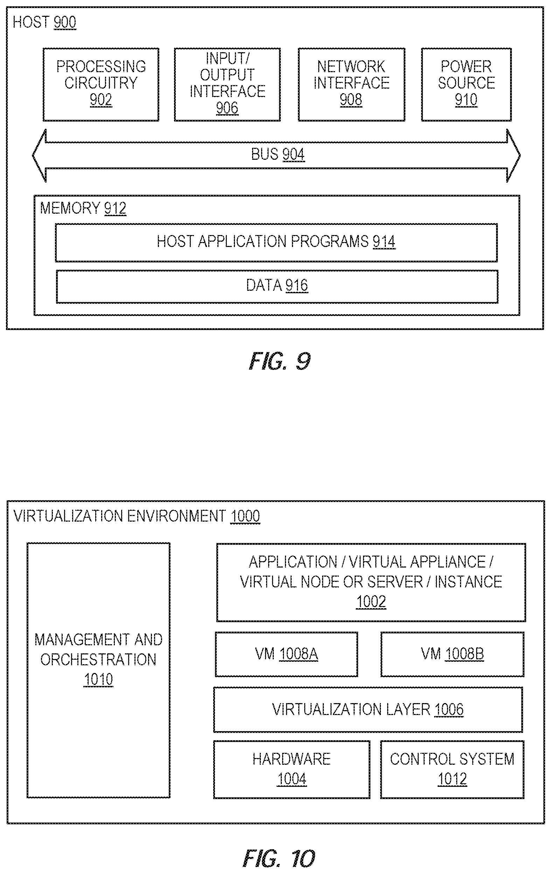

Figure 9 is a block diagram of a host 900, which may be an embodiment of the host 616 of Figure 6, in accordance with various aspects described herein. As used herein, the host 900 may be or comprise various combinations of hardware and/or software including a standalone server, a blade server, a cloud-implemented server, a distributed server, a virtual machine, container, or processing resources in a server farm. The host 900 may provide one or more services to one or more UEs.

The host 900 includes processing circuitry 902 that is operatively coupled via a bus 904 to an input/output interface 906, a network interface 908, a power source 910, and memory 912. Other components may be included in other embodiments. Features of these components may be substantially similar to those described with respect to the devices of previous figures, such as Figures 7 and 8, such that the descriptions thereof are generally applicable to the corresponding components of the host 900.

The memory 912 may include one or more computer programs including one or more host application programs 914 and data 916, which may include user data, e.g. data generated by a UE for the host 900 or data generated by the host 900 for a UE. Embodiments of the host 900 may utilize only a subset or all of the components shown. The host application programs 914 may be implemented in a container-based architecture and may provide support for video codecs (e.g., Versatile Video Coding (VVC), High Efficiency Video Coding (HEVC), Advanced Video Coding (AVC), Moving Picture Experts Group (MPEG), VP9) and audio codecs (e.g., Free Lossless Audio Codec (FLAC), Advanced Audio Coding (AAC), MPEG, G.711), including transcoding for multiple different classes, types, or implementations of UEs (e.g., handsets, desktop computers, wearable display systems, and heads-up display systems). The host application programs 914 may also provide for user authentication and licensing checks and may periodically report health, routes, and content availability to a central node, such as a device in or on the edge of a core network. Accordingly, the host 900 may select and/or indicate a different host for Over-The-Top (OTT) services for a UE. The host application programs 914 may support various protocols, such as the HTTP Live Streaming (HLS) protocol, Real-Time Messaging Protocol (RTMP), Real-Time Streaming Protocol (RTSP), Dynamic Adaptive Streaming over HTTP (DASH or MPEG-DASH), etc.

Figure 10 is a block diagram illustrating a virtualization environment 1000 in which functions implemented by some embodiments may be virtualized. In the present context, virtualizing means creating virtual versions of apparatuses or devices which may include virtualizing hardware platforms, storage devices, and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more Virtual Machines (VMs) implemented in one or more virtual environments 1000 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1002 (which may alternatively be called software instances, virtual appliances, network functions, virtual nodes, virtual network functions, etc.) are run in the virtualization environment 900 to implement some of the features, functions, and/or benefits of some of the embodiments disclosed herein.

Hardware 1004 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1006 (also referred to as hypervisors or VM Monitors (VMMs)), provide VMs 1008A and 1008B (one or more of which may be generally referred to as VMs 1008), and/or perform any of the functions, features, and/or benefits described in relation with some embodiments described herein. The virtualization layer 1006 may present a virtual operating platform that appears like networking hardware to the VMs 1008.

The VMs 1008 comprise virtual processing, virtual memory, virtual networking, or interface and virtual storage, and may be run by a corresponding virtualization layer 1006. Different embodiments of the instance of a virtual appliance 1002 may be implemented on one or more of the VMs 1008, and the implementations may be made in different ways. Virtualization of the hardware is in some contexts referred to as Network Function Virtualization (NFV). NFV may be used to consolidate many network equipment types onto industry standard high volume server hardware, physical switches, and physical storage, which can be located in data centers and customer premise equipment.

In the context of NFV, a VM 1008 may be a software implementation of a physical machine that runs programs as if they were executing on a physical, non-virtualized machine. Each of the VMs 1008, and that part of the hardware 1004 that executes that VM, be it hardware dedicated to that VM and/or hardware shared by that VM with others of the VMs 1008, forms separate virtual network elements. Still in the context of NFV, a virtual network function is responsible for handling specific network functions that run in one or more VMs 1008 on top of the hardware 1004 and corresponds to the application 1002.

The hardware 1004 may be implemented in a standalone network node with generic or specific components. The hardware 1004 may implement some functions via virtualization. Alternatively, the hardware 1004 may be part of a larger cluster of hardware (e.g., such as in a data center or CPE) where many hardware nodes work together and are managed via management and orchestration 1010, which, among others, oversees lifecycle management of the applications 1002. In some embodiments, the hardware 1004 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a RAN or a BS. In some embodiments, some signaling can be provided with the use of a control system 1012 which may alternatively be used for communication between hardware nodes and radio units.

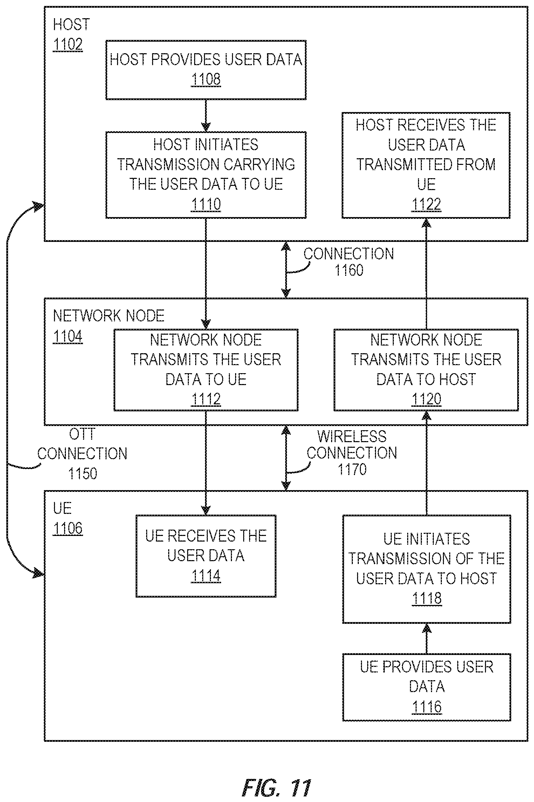

Figure 11 shows a communication diagram of a host 1102 communicating via a network node 1104 with a UE 1106 over a partially wireless connection in accordance with some embodiments. Example implementations, in accordance with various embodiments, of the UE (such as the UE 612A of Figure 6 and/or the UE 700 of Figure 7), the network node (such as the network node 610A of Figure 6 and/or the network node 800 of Figure 8), and the host (such as the host 616 of Figure 6 and/or the host 900 of Figure 9) discussed in the preceding paragraphs will now be described with reference to Figure 11.

Like the host 900, embodiments of the host 1102 include hardware, such as a communication interface, processing circuitry, and memory. The host 1102 also includes software, which is stored in or is accessible by the host 1102 and executable by the processing circuitry. The software includes a host application that may be operable to provide a service to a remote user, such as the UE 1106 connecting via an OTT connection 1150 extending between the UE 1106 and the host 1102. In providing the service to the remote user, a host application may provide user data which is transmitted using the OTT connection 1150.

The network node 1104 includes hardware enabling it to communicate with the host 1102 and the UE 1106 via a connection 1160. The connection 1160 may be direct or pass through a core network (like the core network 606 of Figure 6) and/or one or more other intermediate networks, such as one or more public, private, or hosted networks. For example, an intermediate network may be a backbone network or the Internet.

The UE 1106 includes hardware and software, which is stored in or accessible by the UE 1106 and executable by the UE's processing circuitry. The software includes a client application, such as a web browser or operator-specific "app" that may be operable to provide a service to a human or non-human user via the UE 1106 with the support of the host 1102. In the host 1102, an executing host application may communicate with the executing client application via the OTT connection 1150 terminating at the UE 1106 and the host 1102. In providing the service to the user, the UE's client application may receive request data from the host's host application and provide user data in response to the request data. The OTT connection 1150 may transfer both the request data and the user data. The UE's client application may interact with the user to generate the user data that it provides to the host application through the OTT connection 1150.

The OTT connection 1150 may extend via the connection 1160 between the host 1102 and the network node 1104 and via a wireless connection 1170 between the network node 1104 and the UE 1106 to provide the connection between the host 1102 and the UE 1106. The connection 1160 and the wireless connection 1170, over which the OTT connection 1150 may be provided, have been drawn abstractly to illustrate the communication between the host 1102 and the UE 1106 via the network node 1104, without explicit reference to any intermediary devices and the precise routing of messages via these devices.

As an example of transmitting data via the OTT connection 1150, in step 1108, the host 1102 provides user data, which may be performed by executing a host application. In some embodiments, the user data is associated with a particular human user interacting with the UE 1106. In other embodiments, the user data is associated with a UE 1106 that shares data with the host 1102 without explicit human interaction. In step 1110, the host 1102 initiates a transmission carrying the user data towards the UE 1106. The host 1102 may initiate the transmission responsive to a request transmitted by the UE 1106. The request may be caused by human interaction with the UE 1106 or by operation of the client application executing on the UE 1106. The transmission may pass via the network node 1104 in accordance with the teachings of the embodiments described throughout this disclosure. Accordingly, in step 1112, the network node 1104 transmits to the UE 1106 the user data that was carried in the transmission that the host 1102 initiated, in accordance with the teachings of the embodiments described throughout this disclosure. In step 1114, the UE 1106 receives the user data carried in the transmission, which may be performed by a client application executed on the UE 1106 associated with the host application executed by the host 1102.

In some examples, the UE 1106 executes a client application which provides user data to the host 1102. The user data may be provided in reaction or response to the data received from the host 1102. Accordingly, in step 1116, the UE 1106 may provide user data, which may be performed by executing the client application. In providing the user data, the client application may further consider user input received from the user via an input/output interface of the UE 1106. Regardless of the specific manner in which the user data was provided, the UE 1106 initiates, in step 1118, transmission of the user data towards the host 1102 via the network node 1104. In step 1120, in accordance with the teachings of the embodiments described throughout this disclosure, the network node 1104 receives user data from the UE 1106 and initiates transmission of the received user data towards the host 1102. In step 1122, the host 1102 receives the user data carried in the transmission initiated by the UE 1106.

One or more of the various embodiments improve the performance of OTT services provided to the UE 1106 using the OTT connection 1150, in which the wireless connection 1170 forms the last segment.

In an example scenario, factory status information may be collected and analyzed by the host 1102. As another example, the host 1102 may process audio and video data which may have been retrieved from a UE for use in creating maps. As another example, the host 1102 may collect and analyze real-time data to assist in controlling vehicle congestion (e.g., controlling traffic lights). As another example, the host 1102 may store surveillance video uploaded by a UE. As another example, the host 1102 may store or control access to media content such as video, audio, VR, or AR which it can broadcast, multicast, or unicast to UEs. As other examples, the host 1102 may be used for energy pricing, remote control of non-time critical electrical load to balance power generation needs, location services, presentation services (such as compiling diagrams etc. from data collected from remote devices), or any other function of collecting, retrieving, storing, analyzing, and/or transmitting data.

In some examples, a measurement procedure may be provided for the purpose of monitoring data rate, latency, and other factors on which the one or more embodiments improve. There may further be an optional network functionality for reconfiguring the OTT connection 1150 between the host 1102 and the UE 1106 in response to variations in the measurement results. The measurement procedure and/or the network functionality for reconfiguring the OTT connection 1150 may be implemented in software and hardware of the host 1102 and/or the UE 1106. In some embodiments, sensors (not shown) may be deployed in or in association with other devices through which the OTT connection 1150 passes; the sensors may participate in the measurement procedure by supplying values of the monitored quantities exemplified above, or by supplying values of other physical quantities from which software may compute or estimate the monitored quantities. The reconfiguring of the OTT connection 1150 may include message format, retransmission settings, preferred routing, etc.; the reconfiguring need not directly alter the operation of the network node 1104. Such procedures and functionalities may be known and practiced in the art. In certain embodiments, measurements may involve proprietary UE signaling that facilitates measurements of throughput, propagation times, latency, and the like by the host 1102. The measurements may be implemented in that software causes messages to be transmitted, in particular empty or 'dummy' messages, using the OTT connection 1150 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole and/or by end users and a wireless network generally.

## Claims

1. A method performed by a User Equipment, UE, the method comprising:
receiving (300), from a first network node belonging to a first radio access technology, a configuration to perform a handover to a second network node belonging to a second radio access technology, the configuration comprising an indication that indicates that the handover is for voice fallback purpose;
connecting (302) to a cell served by the second network node, responsive to receiving (300) the configuration;
after successfully completing the handover to the cell served by the second network node, declaring (304) a radio link failure in the cell served by the second network node;
responsive to declaring (304) the radio link failure in the cell served by the second network node and the indication that indicates that the handover is for voice fallback purpose, storing (306) information associated to the radio link failure in a report, the information comprising an indication that a last successfully completed handover from the first network node to the second network node was for voice fallback purpose; and
sending the report to a network node associated to a target cell to which the UE succeeds to connect at reestablishment.

2. The method of claim 1 wherein the first radio access technology is New Radio, NR, and the second radio access technology is Long Term Evolution, LTE.

3. The method of claim 2 wherein the configuration to perform a handover to a second network node belonging to a second radio access technology, comprising an indication that indicates that the handover is for voice fallback purpose, comprises *a MobilityFromNR* command with voice fallback indication.

4. The method of any of claims 1 - 3 wherein the report is a radio link failure report, and storing (306) the information associated to the radio link failure comprises storing (306) the information in a VarRLF-Report variable.

5. A User Equipment, UE, configured to:
receive (300), from a first network node belonging to a first radio access technology, a configuration to perform a handover to a second network node belonging to a second radio access technology, the configuration comprising an indication that indicates that the handover is for voice fallback purpose;
connect (302) to a cell served by the second network node, responsive to receiving (300) the configuration;
after successfully completing the handover to the cell served by the second network node, declare (304) a radio link failure in the cell served by the second network node;
responsive to declaring (304) the radio link failure in the cell served by the second network node and the indication that indicates that the handover is for voice fallback purpose, store (306) information associated to the radio link failure in a report, the information comprising an indication that a last successfully completed handover from the first network node to the second network node was for voice fallback purpose; and
send the report to a network node associated to a target cell to which the UE succeeds to connect at reestablishment.

6. The UE of claim 5 further configured to perform the method of any of claims 2 to 4.

7. A computer program comprising instructions which, when executed on at least one processor, cause the processor to carry out the method according to any of claims 1 to 4.

8. A non-transitory computer-readable medium comprising instructions executable by processing circuitry of a User Equipment, UE, whereby the UE is operable to:
receive (300), from a first network node belonging to a first radio access technology, a configuration to perform a handover to a second network node belonging to a second radio access technology, the configuration comprising an indication that indicates that the handover is for voice fallback purpose;
connect (302) to a cell served by the second network node, responsive to receiving (300) the configuration;
after successfully completing the handover to the cell served by the second network node, declare (304) a radio link failure in the cell served by the second network node;
responsive to declaring (304) the radio link failure in the cell served by the second network node and the indication that indicates that the handover is for voice fallback purpose, store (306) information associated to the radio link failure in a report, the information comprising an indication that a last successfully completed handover from the first network node to the second network node was for voice fallback purpose; and
send the report to a network node associated to a target cell to which the UE succeeds to connect at reestablishment.

## Patentansprüche

1. Verfahren, das durch ein Benutzergerät (User Equipment - UE) durchgeführt wird, wobei das Verfahren Folgendes umfasst:
Empfangen (300), von einem ersten Netzwerkknoten, der zu einer ersten Funkzugangstechnologie gehört, einer Konfiguration zum Durchführen einer Weiterreichung an einen zweiten Netzwerkknoten, der zu einer zweiten Funkzugangstechnologie gehört, wobei die Konfiguration eine Angabe umfasst, die angibt, dass die Weiterreichung für Sprach-Fallback-Zwecke erfolgt;
Verbinden (302) mit einer Zelle, die durch den zweiten Netzwerkknoten bedient wird, als Reaktion auf das Empfangen (300) der Konfiguration;
nach erfolgreichem Abschluss der Weiterreichung an die Zelle, die durch den zweiten Netzwerkknoten bedient wird, Deklarieren (304) eines Funkverbindungsfehlers in der Zelle, die durch den zweiten Netzwerkknoten bedient wird;
als Reaktion auf das Deklarieren (304) des Funkverbindungsfehlers in der Zelle, die durch den zweiten Netzwerkknoten bedient wird, und der Angabe, die angibt, dass die Weiterreichung zu Sprach-Fallback-Zwecken erfolgt, Speichern (306) von Informationen im Zusammenhang mit dem Funkverbindungsfehler in einem Bericht, wobei die Informationen eine Angabe umfassen, dass eine letzte erfolgreich abgeschlossene Weiterreichung von dem ersten Netzwerkknoten zu dem zweiten Netzwerkknoten zu Sprach-Fallback-Zwecken erfolgte; und
Senden des Berichts an einen Netzwerkknoten, der einer Zielzelle zugeordnet ist, zu der das UE bei der Wiederherstellung erfolgreich eine Verbindung herstellen kann.

2. Verfahren nach Anspruch 1, wobei es sich bei der ersten Funkzugangstechnologie um New Radio (NR) und bei der zweiten Funkzugangstechnologie um Long Term Evolution (LTE) handelt.

3. Verfahren nach Anspruch 2, wobei die Konfiguration zum Durchführen einer Weiterreichung an einen zweiten Netzwerkknoten, der zu einer zweiten Funkzugangstechnologie gehört, umfassend eine Angabe, die angibt, dass die Weiterreichung zu Sprach-Fallback-Zwecken erfolgt, einen *MobilityFromNR*-Befehl mit Sprach-Fallback-Angabe umfasst.

4. Verfahren nach einem der Ansprüche 1-3, wobei der Bericht ein Funkverbindungsfehlerbericht ist und das Speichern (306) der Informationen im Zusammenhang mit dem Funkverbindungsfehler das Speichern (306) der Informationen in einer VarRLF-Berichtsvariablen umfasst.

5. Benutzergerät (UE), das zu Folgendem konfiguriert ist:
Empfangen (300), von einem ersten Netzwerkknoten, der zu einer ersten Funkzugangstechnologie gehört, einer Konfiguration zum Durchführen einer Weiterreichung an einen zweiten Netzwerkknoten, der zu einer zweiten Funkzugangstechnologie gehört, wobei die Konfiguration eine Angabe umfasst, die angibt, dass die Weiterreichung zu Sprach-Fallback-Zwecken erfolgt;
Verbinden (302) mit einer Zelle, die durch den zweiten Netzwerkknoten bedient wird, als Reaktion auf das Empfangen (300) der Konfiguration;
nach erfolgreichem Abschluss der Weiterreichung an die Zelle, die durch den zweiten Netzwerkknoten bedient wird, Deklarieren (304) eines Funkverbindungsfehlers in der Zelle, die durch den zweiten Netzwerkknoten bedient wird;
als Reaktion auf das Deklarieren (304) des Funkverbindungsfehlers in der Zelle, die durch den zweiten Netzwerkknoten bedient wird, und der Angabe, die angibt, dass die Weiterreichung zu Sprach-Fallback-Zwecken erfolgt,
Speichern (306) von Informationen im Zusammenhang mit dem Funkverbindungsfehler in einem Bericht, wobei die Informationen eine Angabe umfassen, dass eine letzte erfolgreich abgeschlossene Weiterreichung von dem ersten Netzwerkknoten zu dem zweiten Netzwerkknoten zu Sprach-Fallback-Zwecken erfolgte; und
Senden des Berichts an einen Netzwerkknoten, der einer Zielzelle zugeordnet ist, zu der das UE bei der Wiederherstellung erfolgreich eine Verbindung herstellen kann.

6. UE nach Anspruch 5, das ferner zum Durchführen des Verfahrens nach einem der Ansprüche 2 bis 4 konfiguriert ist.

7. Computerprogramm, umfassend Anweisungen, die, wenn sie auf mindestens einem Prozessor ausgeführt werden, den Prozessor veranlassen, das Verfahren nach einem der Ansprüche 1 bis 4 durchzuführen.

8. Nichtflüchtiges computerlesbares Medium, umfassend Anweisungen, die durch Verarbeitungsschaltungen eines Benutzergeräts (UE) ausführbar sind, wobei das UE zu Folgendem betreibbar ist:
Empfangen (300), von einem ersten Netzwerkknoten, der zu einer ersten Funkzugangstechnologie gehört, einer Konfiguration zum Durchführen einer Weiterreichung an einen zweiten Netzwerkknoten, der zu einer zweiten Funkzugangstechnologie gehört, wobei die Konfiguration eine Angabe umfasst, die angibt, dass die Weiterreichung zu Sprach-Fallback-Zwecken erfolgt;
Verbinden (302) mit einer Zelle, die durch den zweiten Netzwerkknoten bedient wird, als Reaktion auf das Empfangen (300) der Konfiguration;
nach erfolgreichem Abschluss der Weiterreichung an die Zelle, die durch den zweiten Netzwerkknoten bedient wird, Deklarieren (304) eines Funkverbindungsfehlers in der Zelle, die durch den zweiten Netzwerkknoten bedient wird;
als Reaktion auf das Deklarieren (304) des Funkverbindungsfehlers in der Zelle, die durch den zweiten Netzwerkknoten bedient wird, und der Angabe, die angibt, dass die Weiterreichung zu Sprach-Fallback-Zwecken erfolgt, Speichern (306) von Informationen im Zusammenhang mit dem Funkverbindungsfehler in einem Bericht, wobei die Informationen eine Angabe umfassen, dass eine letzte erfolgreich abgeschlossene Weiterreichung von dem ersten Netzwerkknoten zu dem zweiten Netzwerkknoten zu Sprach-Fallback-Zwecken erfolgte; und
Senden des Berichts an einen Netzwerkknoten, der einer Zielzelle zugeordnet ist, zu der das UE bei der Wiederherstellung erfolgreich eine Verbindung herstellen kann.

## Revendications

1. Procédé mis en œuvre par un équipement utilisateur, UE, le procédé comprenant :
la réception (300), en provenance d'un premier nœud de réseau appartenant à une première technologie d'accès radio, d'une configuration pour effectuer un transfert vers un deuxième nœud de réseau appartenant à une deuxième technologie d'accès radio, la configuration comprenant une indication qui indique que le transfert est à des fins de repli vocal ;
la connexion (302) à une cellule desservie par le deuxième nœud de réseau, en réponse à la réception (300) de la configuration ;
après avoir terminé avec succès le transfert vers la cellule desservie par le deuxième nœud de réseau, la déclaration (304) d'une défaillance de liaison radio dans la cellule desservie par le deuxième nœud de réseau ;
en réponse à la déclaration (304) de la défaillance de liaison radio dans la cellule desservie par le deuxième nœud de réseau et à l'indication indiquant que le transfert est destiné à un repli vocal, la stockage (306) des informations associées à la défaillance de liaison radio dans un rapport, les informations comprenant une indication selon laquelle un dernier transfert réussi du premier nœud de réseau au deuxième nœud de réseau était destiné à un repli vocal ; et
l'envoi du rapport à un nœud de réseau associé à une cellule cible à laquelle l'UE réussit à se connecter lors du rétablissement.

2. Procédé selon la revendication 1, dans lequel la première technologie d'accès radio est New Radio, NR, et la deuxième technologie d'accès radio est Long Term Evolution, LTE.

3. Procédé selon la revendication 2, dans lequel la configuration pour effectuer un transfert vers un deuxième nœud de réseau appartenant à une deuxième technologie d'accès radio, comprenant une indication qui indique que le transfert est destiné à un repli vocal, comprend une commande *MobilityFromNR* avec une indication de repli vocal.

4. Procédé selon l'une quelconque des revendications 1 à 3, dans lequel le rapport est un rapport de défaillance de liaison radio, et le stockage (306) des informations associées à la défaillance de liaison radio comprend le stockage (306) des informations dans une variable VarRLF-Report.

5. Equipement utilisateur, UE, configuré pour :
recevoir (300), en provenance d'un premier nœud de réseau appartenant à une première technologie d'accès radio, une configuration pour effectuer un transfert vers un deuxième nœud de réseau appartenant à une deuxième technologie d'accès radio, la configuration comprenant une indication qui indique que le transfert est à des fins de repli vocal ;
se connecter (302) à une cellule desservie par le deuxième nœud de réseau, en réponse à la réception (300) de la configuration ;
après avoir terminé avec succès le transfert vers la cellule desservie par le deuxième nœud de réseau, déclarer (304) une défaillance de liaison radio dans la cellule desservie par le deuxième nœud de réseau ;
en réponse à la déclaration (304) de la défaillance de liaison radio dans la cellule desservie par le deuxième nœud de réseau et à l'indication indiquant que le transfert est destiné à un repli vocal, stocker (306) les informations associées à la défaillance de liaison radio dans un rapport, les informations comprenant une indication selon laquelle un dernier transfert réussi du premier nœud de réseau au deuxième nœud de réseau était destiné à un repli vocal ; et
envoyer le rapport à un nœud de réseau associé à une cellule cible à laquelle l'UE réussit à se connecter lors du rétablissement.

6. UE selon la revendication 5 outre configuré pour mettre en œuvre le procédé selon l'une quelconque des revendications 2 à 4.

7. Programme informatique comprenant des instructions qui, lorsqu'elles sont exécutées sur au moins un processeur, amènent le processeur à mettre en œuvre le procédé selon l'une quelconque des revendications 1 à 4.

8. Support non transitoire lisible par ordinateur comprenant des instructions exécutables par un circuit de traitement d'un équipement utilisateur, UE, moyennant quoi l'UE est fonctionnel pour :
recevoir (300), en provenance d'un premier nœud de réseau appartenant à une première technologie d'accès radio, une configuration pour effectuer un transfert vers un deuxième nœud de réseau appartenant à une deuxième technologie d'accès radio, la configuration comprenant une indication qui indique que le transfert est à des fins de repli vocal ;
se connecter (302) à une cellule desservie par le deuxième nœud de réseau, en réponse à la réception (300) de la configuration ;
après avoir terminé avec succès le transfert vers la cellule desservie par le deuxième nœud de réseau, déclarer (304) une défaillance de liaison radio dans la cellule desservie par le deuxième nœud de réseau ;
en réponse à la déclaration (304) de la défaillance de liaison radio dans la cellule desservie par le deuxième nœud de réseau et à l'indication indiquant que le transfert est destiné à un repli vocal, stocker (306) les informations associées à la défaillance de liaison radio dans un rapport, les informations comprenant une indication selon laquelle un dernier transfert réussi du premier nœud de réseau au deuxième nœud de réseau était destiné à un repli vocal ; et
envoyer le rapport à un nœud de réseau associé à une cellule cible à laquelle l'UE réussit à se connecter lors du rétablissement.
